# EUROPÄISCHE PATENTSCHRIFT

(11) **EP 3 459 160 B1**
(45) Veröffentlichungstag und Bekanntmachung des Hinweises auf die Patenterteilung: **01.04.2020**
(21) Anmeldenummer: 17726947.9
(22) Anmeldetag: 31.05.2017
(51) Int. Cl.: H02K 3/24, H02K 3/30, H02K 9/19

(54) **WASSERGEKÜHLTE GENERATORLEISTE MIT KÜHLKANAL-ABSTANDSRAUM**
WATER-COOLED GENERATOR STRIP WITH COOLING CHANNEL DISTANCE SPACE
BARRE OMNIBUS DE GENERATEUR REFROIDIE A L'EAU COMPRENANT UN ESPACE DE SEPARATION DE CANAL DE REFROIDISSEMENT

(30) Priorität: 04.07.2016 EP 16177683
(43) Veröffentlichungstag der Anmeldung: 27.03.2019
(73) Patentinhaber: Siemens Aktiengesellschaft, 80333 München (DE)
(72) Erfinder: MASHKIN, Andrey, 50672 Köln (DE); BROCKSCHMIDT, Mario, 45131 Essen (DE); MERTE, Ralf, 44225 Dortmund (DE); POHLMANN, Friedhelm, 45355 Essen (DE); LEHMANN, Christoph, 47506 Neukirchen-Vluyn (DE); WARREN, Bobby A., Fort Mill, SC 29715 (US)
(86) Internationale Anmeldenummer: PCT/EP2017/063155
(87) Internationale Veröffentlichungsnummer: WO 2018/007071

(56) Entgegenhaltungen:
- DE-A1- 2 428 816
- DE-B- 1 128 542
- DE-C- 973 696
- GB-A- 1 034 847
- US-A- 2 920 218
- US-A1- 2008 284 262

## Beschreibung

Die Erfindung betrifft eine wassergekühlte Generatorleiste mit wenigstens zwei parallel angeordneten Leiterstapeln, eine elektrische Maschine mit einer Mehrzahl solcher Generatorleisten sowie ein Verfahren zur Herstellung von wassergekühlten Generatorleisten.

Eine elektrische Maschine, wie zum Beispiel ein Turbogenerator, weist eine Wicklung von elektrischen Leitern auf. Die elektrischen Leiter sind an ihrem Umfang von einer Leiterisolation umhüllt, um die elektrischen Leiter gegen die Umgebung, gegen ein Blechpaket der elektrischen Maschine und/oder gegen benachbarte Windungen der Wicklung elektrisch zu isolieren.

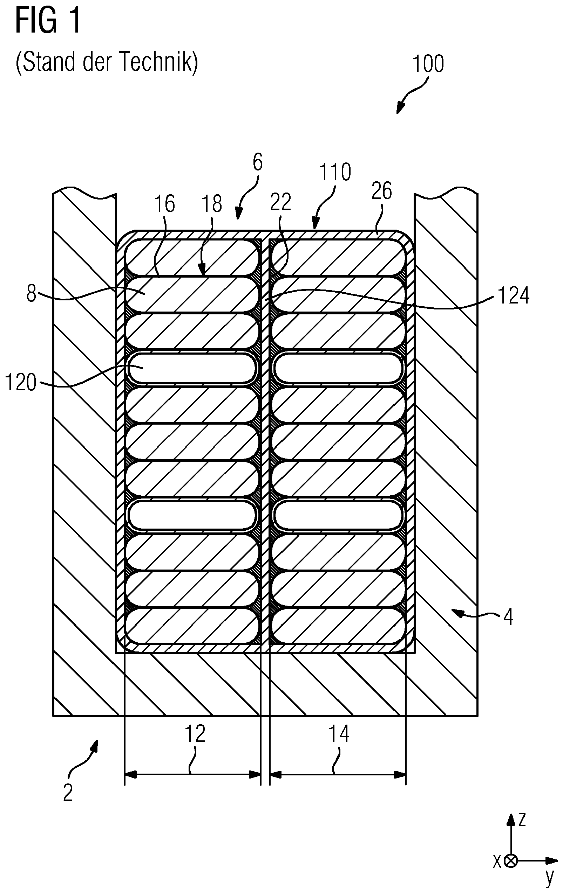

Bei bekannten elektrischen Maschinen 100, beispielsweise gemäß Fig. 1, ist das Blechpaket im Stator 2 als Statorkern 4 ausgebildet, der - auf dem Umfang gleichmäßig verteilt - parallele Ausnehmungen 6 (auch als Nuten bezeichnet) aufweist, in welchen jeweils eine Mehrzahl von in Reihe geschalteten Generatorleisten 110, im Stator gleichbedeutend als Statorleisten bezeichnet, die elektrischen Leiter des Stators beherbergt. Eine gängige Anordnung der Leiter innerhalb der Generatorleisten sieht dabei zwei parallel angeordnete Leiterstapel 12 und 14 mit jeweils mehreren übereinander angeordneten, mittels einer Leiterisolation 16 einzeln isolierten Leiterstangen 8 vor. Diese weisen häufig einen abgerundeten, rechteckigen Querschnitt 18 beispielsweise mit einem Seitenverhältnis von fünf (lange Seite) zu eins (kurze Seite) auf und sind ein Vielfaches länger als die Maße des Querschnitts. Zwischen den in Reihe geschalteten Generatorleisten werden in gängiger Bauweise einzelne Leiterstangen 8 der verschiedenen Leiterstapel transponiert, d.h. die Leiterstangen 8 werden zwischen den Generatorleisten gekröpft und wechseln damit am Übergang zwischen zwei Generatorleisten den Leiterstapel.

Die Leiterstangen 8 sind zueinander ebenso wie die Leiterstapel 12 und 14 mittels eines ausgehärteten Harzes 22 festgelegt, das zwischen die Leiterstapel bei der Montage mittels eines Schwertes 124 eingebracht wurde. Die ganze Generatorleiste ist zumindest an ihrem Umfang mittels einer Hauptisolation 26 gegenüber dem Statorkern 4 elektrisch isoliert.

Durch die Anordnung solcher Generatorleisten 110 im Statorkern ist es notwendig, die durch die Strominduktion eingebrachte Wärme mittels eines Kühlkreislaufes abzuführen. Dies geschieht in herkömmlicher Weise, indem in jedem Leiterstapel 12 und 14 jeder fünfte oder jeder siebte (in Fig. 1 zur einfacheren Darstellung jeder vierte) der übereinander angeordneten Leiter 8 durch einen Kühlkanal 120 zur Führung von Kühlwasser ersetzt ist. Genau wie die Leiter 8 werden auch die Kühlkanäle in gängiger Bauweise transponiert und gekröpft.

In einer typischen bekannten Generatorleiste 110, bei welcher in zwei parallelen Leiterstapeln 12 und 14 beispielsweise jeweils 30 Leiterstangen übereinander angeordnet sind, sind folglich ca. acht bis zwölf Kühlwasserkanäle durch die Generatorleiste zu führen und an Stirnseiten der Generatorleiste jeweils an einen Wasserkreislauf der elektrischen Maschine 100 anzuschließen.

Aus der US 2008/284262 A1 ist eine Statorwicklung für eine elektrische Maschine bekannt, bei der mehrere in einer Spalte angeordnete Kühlkanäle, die ein Kühlmedium führen, innerhalb der Statorwicklung angeordnet sind. Die elektrische Isolation, die jeden der Kupferleiter der Statorwicklung und die Kühlkanäle umschließt, ist mit einem Polymer, das in hohem Maße thermisch leitend ist, gebildet.

Aus der DE 24 28 816 1 ist eine innengekühlte Hochspannungsspule bekannt, bei der mindestens zwei Reihen Hochspannungs-Wicklungsstäbe eine Reihe innenkühlender Kanäle gemein sind.

Aus der DE 11 28 542 B ist eine flüssigkeitsgekühlte Wicklung für elektrische Maschinen mit mehreren zwischen den Teilleiterreihen angeordneten Einzelkühlkanälen bekannt.

Aus der DE 973 696 C ist ein Nutstab für große elektrische Maschinen bekannt, wobei der Stab aus Einzelleitern zusammengesetzt ist derart, dass durch Zwischenstücke voneinander getrennte axiale Kühlkanäle eingeschlossen sind.

Aus der GB 1 034 847 A ist ein flüssigkeitsgekühlter Rotor für einen Turbogenerator bekannt, bei dem in einer Nut des Rotors zwei Reihen von Leiterstäben und dazwischen mindestens zwei gegensinnig durchströmte Kühlkanäle angeordnet sind.

Aus der US 2 920 218 A ist eine gasgekühlte dynamoelektrische Maschine bekannt, bei der der Rotor axiale Kanäle und radiale Ventilationspassagen aufweist, die mittels zweier an den Rotorenden angeordneter Gebläse von Ventilationsgas durchströmt werden.

Aufgabe der Erfindung ist die Verbesserung einer wassergekühlten Generatorleiste dahingehend, dass eine gezielte, direkte Beeinflussung des Magnetfeldes in der Maschine ermöglicht wird.

Gelöst wird diese Aufgabe durch eine Generatorleiste gemäß Anspruch 1, eine elektrische Maschine gemäß Anspruch 10 und ein Verfahren zur Herstellung einer wassergekühlten Generatorleiste gemäß Anspruch 12.

Eine erfindungsgemäße wassergekühlte Generatorleiste weist wenigstens zwei parallel angeordnete Leiterstapel auf, die jeweils eine Mehrzahl übereinander angeordneter, voneinander mittels einer Leiterisolation elektrisch isolierter Leiter aufweisen. Die Generatorleiste ist vorzugsweise von der Bauart, bei welcher die einzelnen isolierten Leiter jedes Leiterstapels zueinander und/oder die Leiterstapel selbst zueinander mittels eines ausgehärteten Harzes, das vorzugsweise die Leiter wenigstens teilweise umgibt, geometrisch (also in ihrer relativen Position zueinander) festgelegt sind. Erfindungsgemäß ist zwischen den Leiterstapeln ein Abstandsraum vorgesehen, in dem wenigstens ein Kühlkanal zur Leitung von Kühlwasser angeordnet ist.

Um die Wärmeübertragung von den Leiterstangen der Leiterstapel hin zum Kühlkanal zu verbessern, weist der Kühlkanal erfindungsgemäß eine hoch-wärmeleitfähige und vorzugsweise wasserabweisende Außenhülle auf, deren Außenseite wenigstens in Teilabschnitten mit den Leitern der Leiterstapel, bzw. insbesondere deren Leiterisolation, in Berührung steht. Unter einer solchen Berührung ist insbesondere ein direkter, flächiger Kontakt zwischen der Außenhülle des Kühlkanals und der Isolation des Leiters zu verstehen. Vorzugsweise weist die Leiterisolation einen Werkstoff auf, der eine gute Wärmeleitfähigkeit aufweist.

Erfindungsgemäß weist die Außenhülle des Kühlkanals einen ferromagnetischen Werkstoff und eine elektrische Isolierschicht auf. Dies ermöglicht bei geeigneter geometrischer Ausgestaltung eine gezielte, direkte Beeinflussung der Magnetfelder in der elektrischen Maschine, was in bestimmten Anwendungsfällen gewünscht sein kann. Der ferromagnetische Werkstoff kann dazu gegebenenfalls auch nur bereichsweise und/oder in unterschiedlichen Gewichtsanteilen eingesetzt werden.

Eine Wärmeabfuhr aus der Generatorleiste findet dabei über den derart zentral bzw. mittig geführten Kühlkanal statt, wobei die beiden Leiterstapel ausreichend weit voneinander beanstandet sind, dass im dazwischen angeordneten Abstandsraum ein Kühlkanal mit ausreichender Flussrate für die benötigte Kühlleistung Platz findet.

Durch die zentrale Führung des Kühlkanals entfällt beim Anschluss einer Generatorleiste, beispielsweise an eine weitere Generatorleiste mit versetzter Leiterführung die Notwendigkeit, den Kühlkanal mittels einer aufwendigen Kröpf-Verbindung, gegebenenfalls ebenso versetzt, anzuschließen. Solche Kröpf-Verbindungen können beispielsweise für die oben zum Stand der Technik beschriebenen Kühlkanäle, die anstatt eines Leiters verbaut sind, nötig sein und erfordern einen teuren Werkstoff, beispielsweise geeignete V2A-Stahllegierungen. Der erfindungsgemäße, zentrale Kühlkanal muss nicht auf diese Weise gekröpft werden. Für seine Außenhülle und/oder gegebenenfalls Schnittstellen können daher andere und günstigere Werkstoffe Verwendung finden.

Zudem benötigt eine erfindungsgemäße Generatorleiste eine geringere Bauhöhe in Stapelhochrichtung, weil nicht mehr beispielsweise jeder fünfte bis siebte Platz im Leiterstapel für einen Kühlkanal benötigt wird und stattdessen mit einer Leiterstange besetzt werden kann. Dadurch kann die benötigte Statornut-Tiefe und/oder der benötigte Statorkern-Durchmesser reduziert werden.

Die Erfindung ist natürlich auch auf Generatorleisten mit drei oder mehr parallel angeordneten Leiterstapeln anwendbar, wobei dann zwischen den jeweils benachbarten Leiterstapeln jeweils ein separater Abstandsraum vorgesehen ist, in welchem ein (im Sinne der Erfindung auch als "zentral" oder "mittig" bezeichneter) Kühlkanal angeordnet ist.

Das Material der Außenhülle des Kühlkanals weist insbesondere einen faserverstärkten und/oder abriebfesten Polymerwerkstoff und/oder einen nicht-magnetischen, metallischen Werkstoff auf. Beispielsweise kommen folgende Werkstoffe in Betracht: Glasfaser verstärkte Polymere, Carbonfaser verstärkte Polymere, Teflon, Aramid, Kevlar, Modflon, Polyimide, Nomex, rostfreie Stähle wie beispielsweise V2A-Stahl, und/oder Aluminium.

In einer alternativen Ausführungsform weist die Außenhülle des Kühlkanals einen ferromagnetischen Werkstoff und eine elastische Isolierschicht auf.

Vorzugsweise erstreckt sich der Kühlkanal im Wesentlichen entlang der gesamten Stapelhöhe der Leiterstapel, um eine homogene und ausreichende Wärmeabfuhr zu unterstützen.

Ab einer bestimmten Stapelhöhe der Leiterstapel kann es zum Erreichen eines homogenen Flusses von Kühlwasser sinnvoll sein, den Kühlkanal wenigstens bereichsweise zu unterteilen, um eine homogene Wärmeabfuhr zu unterstützen. Vorzugsweise ist dazu im Kühlkanal wenigstens eine, insbesondere quer zur Stapelhochrichtung verlaufende, Trennbande (im Sinne einer Brücke von einer Außenwand zur anderen Außenwand) zur Lenkung eines Flusses von Kühlwasser im Kühlkanal vorgesehen.

Eine andere bevorzugte Möglichkeit zur Unterstützung einer homogenen Wärmeabfuhr kann ein, vorzugsweise stapelweiser, Einbau mehrerer, übereinander verlaufender Kühlkanäle im Abstandsraum sein. Dabei weist die Generatorleiste vorzugsweise mehrere Kühlkanäle auf, die derart angeordnet sind, dass im Wesentlichen entlang der gesamten Stapelhöhe der Leiterstapel wenigstens einer der Kühlkanäle angeordnet ist.

Um den Platzbedarf - bezogen auf die erreichbare Stärke des magnetischen Feldes - weiter zu minimieren, weisen die Leiter der Leiterstapel einen Rechteck-Querschnitt mit einer kurzen und einer langen Rechteck-Seite auf und stehen mit der Außenhülle eines Kühlkanals an ihrer kurzen Seite in Berührung. Dieser Rechteck-Querschnitt ist häufig mit abgerundeten oder abgefasten Eckkanten ausgeführt, weil dies sowohl die Isolation der einzelnen Leiter erleichtert, als auch günstiger zu fertigen ist.

Auf dieser abgerundeten oder abgefasten Ausbildung des Leiterquerschnitts beruht eine bevorzugte Weiterbildung der Erfindung, bei welcher der Wärmeabtransport von den einzelnen Leitern weiter verbessert werden kann. Gemäß dieser Weiterbildung ist zwischen der Außenseite des Kühlkanals und jeweils zwei benachbarten Leitern eines der Leiterstapel ein Zwischenraum angeordnet, der insbesondere durch die ebene Außenseite des Kühlkanals und die an ihren langen Seiten aneinander anliegenden, zur kurzen Seite hin abgerundeten oder abgefasten Leiterstangen abgegrenzt ist. Gemäß dieser Weiterbildung ist dieser Zwischenraum wenigstens teilweise, besonders bevorzugt vollständig, mit einem hoch-wärmeleitfähigen Füllstoff gefüllt.

Dies verbessert die Wärmeabfuhr auch bei Anordnung des Kühlkanals an der kurzen Seite des Rechteck-Querschnitts bei gleichzeitig abgerundeten Querschnitts-Ecken. Dass in diesem Fall nur etwa beispielsweise 60 % der Längserstreckung der kurzen Seite mit der Außenseite des Kühlkanals in direkte Berührung kommen, wird durch die "indirekte" Wärmeübertragung über den Füllstoff kompensiert, der in den Zwischenräumen angeordnet ist.

Um eine hohe Wärmeleitfähigkeit des verwendeten Füllstoffs sicherzustellen, weist dieser ein wärmeaushärtendes Harz auf, beispielsweise ein Epoxydharz, das gegebenenfalls dem zur geometrischen Festlegung der Leiter verwendeten Harz entsprechen kann. Im vorliegend betrachteten Füllstoff sind diesem Harz planare und/oder kugelige Partikel mit einem Aluminiumoxid-Werkstoff, einem Boron-Nitrid-Werkstoff und/oder einem anderen festen Werkstoff mit einer Wärmeleitfähigkeit von mehr als 30 W/mK beigemischt und vorzugsweise im Wesentlichen gleichmäßig in diesem Harz verteilt.

Vorzugsweise weist die Generatorleiste zwei Stirnseiten auf. Um die Anbindung der Generatorleiste an einen Kühlwasserkreislauf der elektrischen Maschinen möglichst einfach zu gestalten, ist an diesen Stirnseiten der Kühlkanal jeweils mittels einer einzigen Kühlwasser-Schnittstelle mit dem Kühlwasserkreislauf verbindbar.

Eine erfindungsgemäße elektrische Maschine weist eine Rotoranordnung und eine Statoranordnung auf, die eine Mehrzahl von Leitergruppen mit jeweils einer Mehrzahl in Reihe geschalteter Generatorleisten im Sinne der Erfindung aufweist. Durch die Verwendung solcher Generatorleisten kann beispielsweise eine einfache Gestaltung der Wasserkreisläufe der elektrischen Maschine erreicht werden.

Vorzugsweise weist die elektrische Maschine dazu einen Kühlwasserkreislauf auf, der alle Generatorleisten einer Leitergruppe mit Kühlwasser versorgt. Unter einer Leitergruppe kann insbesondere die Anordnung aller, in einer Ausnehmung des Statorkerns angeordneter Generatorleisten verstanden werden.

Ein erfindungsgemäßes Verfahren zur Herstellung einer wassergekühlten Generatorleiste bezieht sich insbesondere auf Generatorleisten im Sinne der Erfindung, aber auch auf andere Generatorleiten. Das Verfahren weist die Schritte auf, einen Kühlkanal auf einer Außenseite mit einem hoch-wärmeleitfähigen Füllstoff zu beschichten, zwei Leiterstapel bereitzustellen, die Leiterstapel und den beschichteten Kühlkanal zueinander so zu positionieren, dass Kontakt zwischen den Leiterisolationen der einzelnen Leiter der Leiterstapel und dem Füllstoff besteht, und die derart positionierte Anordnung aus Leiterstapeln und Kühlkanal durch Erhitzen und/oder Druckbeaufschlagen auszuhärten.

Eine Vorbeschichtung des Kühlkanals mit dem Füllstoff macht die Verwendung eines sogenannten "Schwertes", an dem bei herkömmlichen Generatoren das Harz zwischen zwei parallel angeordnete Leiterstapel eingeführt wird, überflüssig, weil der Kühlkanal gleichsam als dieses "Schwert" eingesetzt wird. Die herkömmlichen Fertigungsschritte "Montieren der Kühlkanäle" und "Montieren der Trennung der Leiterstapel (harzgefülltes an Schwert)" können auf diese Weise zusammengefasst werden, was die Fertigung deutlich vereinfacht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei zeigt:
- Fig. 1: in einer Schnittansicht eine bekannte Generatorleiste mit einer Mehrzahl von Kühlkanälen;
- Fig. 2: in einer Schnittansicht eine Generatorleiste nach einer Ausführung der Erfindung mit einem zentralen Kühlkanal; und
- Fig. 3: in einer Draufsicht die Generatorleiste nach Fig. 2 mit einem Kühlwasser-Anschluss.

In Fig. 1 ist die in der Beschreibungseinleitung dargestellte, bekannte Generatorleiste 110 in ihrer Einbauumgebung, einem Ausschnitt einer bekannten elektrischen Maschine 100, dargestellt. Diese Generatorleiste 110 ist umständlich zu fertigen und hat aufgrund der Anordnung der Kühlkanäle 120 innerhalb der Leiterstapel 12 und 14 einen hohen Platzbedarf in Stapelhochrichtung Z.

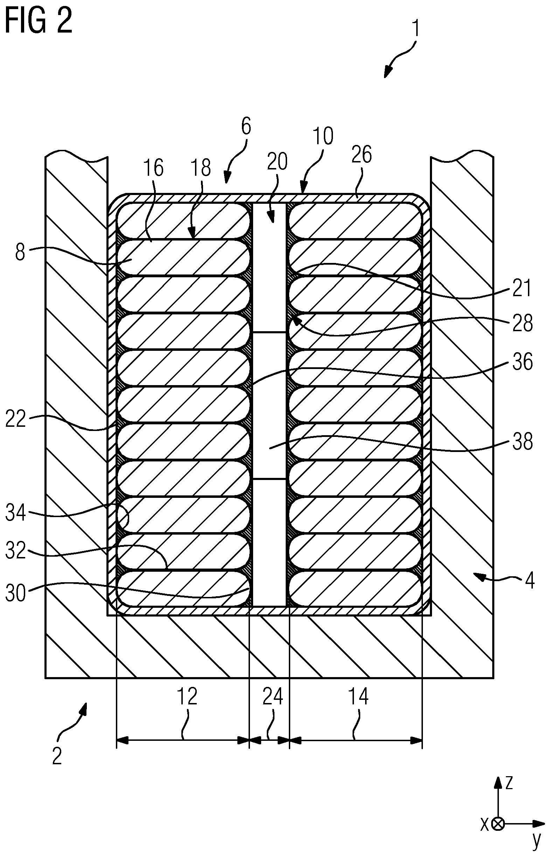

In Fig. 2 ist ein Ausschnitt einer elektrischen Maschine 1, hier eines Turbogenerators, mit einer wassergekühlten Generatorleiste 10 mit einem einzigen, zentralen Kühlkanal 20 gemäß einer Ausführung der Erfindung dargestellt.

Die dargestellte Generatorleiste 10 weist wenigstens zwei parallel angeordnete Leiterstapel 12 und 14 auf, deren Leiter, hier Leiterstangen 8, mittels einer Leiterisolation 16, die an einem Umfang 18 der Leiterstange 8 (an jeder separat) angeordnet ist, elektrisch voneinander getrennt sind. Die Leiterstangen 8 sind zueinander mittels eines ausgehärteten Harzes 22 und mittels eines ausgehärteten, hoch-wärmeleitfähigen Füllstoffes 28 geometrisch festgelegt. Zwischen den Leiterstapeln 12 und 14 ist ein Abstandsraum 24 vorgesehen, in dem ein einzelner Kühlkanal 20 angeordnet ist, der sich - bezüglich der Stapelhochrichtung Z - entlang der gesamten Erstreckung der Leiterstapel 12 und 14 erstreckt.

Eine Außenseite einer Außenhülle 21 des Kühlkanals 20 steht in Berührung mit der ihr zugewandten, kurze Seite 30 jeder der Leiterstangen 8, soweit dieser direkte Kontakt nicht wegen der abgerundeten Ausbildung (Abrundungen 34) des ansonsten rechteckigen Querschnitts der Leiterstangen 8 unmöglich ist.

Zwischen dem Kühlkanal 20 und jeweils zwei benachbarten Leiterplatten 8 ist aufgrund der Abrundungen 34 jeweils ein Zwischenraum 36 ausgebildet, in welchem in diesem Ausführungsbeispiel ein hoch-wärmeleitfähigkeit Füllstoff 28 mit einem ausgehärteten Harz und darin verteilt angeordneten Wärmeleit-Partikeln angeordnet ist.

Durch die Verwendung dieses Füllstoffs 28 ist trotz der Abrundungen 34 an den im Verhältnis zu den langen Seiten 32 kürzer ausgebildeten kurzen Seiten 30 der Leiterstangen 8 für einen ausreichenden Wärmetransport von den Leiterstangen hin zum Kühlkanal 20 und damit dem Kühlwasser gesorgt.

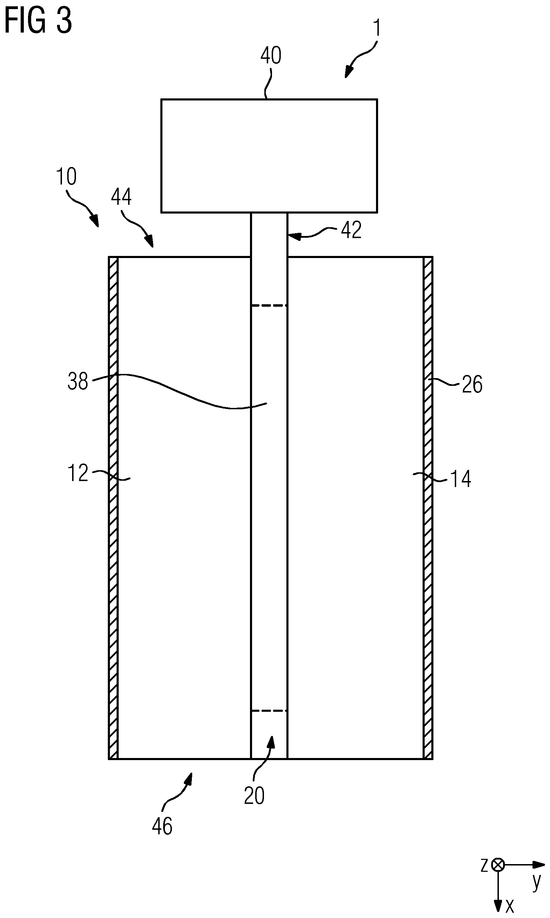

Um einen homogenen Kühlwasser-Fluss und insbesondere eine homogene Wärmeaufnahme über die gesamte Stapelhöhe zu gewährleisten, sind zudem im Kühlkanal zwei, auch als Brücken bezeichnete, Trennbanden 38 vorgesehen, die sich (wie aus Fig. 3 ersichtlich) im Ausführungsbeispiel im Wesentlichen entlang der gesamten Längserstreckung X der Generatorleiste 10 erstrecken.

Bei der Fertigung der Generatorleiste 10 gemäß diesem Ausführungsbeispiel können die herkömmlichen Fertigungsschritte "Montieren der Kühlkanäle" und "Montieren der Trennung der Leiterstapel (Harz an Schwert)" zusammengefasst werden, indem der Kühlkanal 20 zur Montage mit dem Füllstoff 28 beschichtet wird, sodass dieser nach Montage mit den Leiterstapeln 12, 14 und vor dem Aushärten in die Zwischenräume 36 eindringen kann.

In Fig. 3 ist in einer Draufsicht das Ausführungsbeispiel gemäß Fig. 2 dargestellt, wobei ersichtlich wird, dass sich der Kühlkanal 20 entlang der gesamten Längserstreckung X der Generatorleiste 10 erstreckt. Zudem ist an einer ersten Stirnseite 44 der Generatorleiste 10 eine einzige Kühlwasser-Schnittstelle 42 zu einem schematisch dargestellten Kühlwasserkreislauf 40 dargestellt, die deutlich einfacher ausgestaltet werden kann als die vielfachen Schnittstellen, die bei nicht zentral angeordneten Kühlkanälen, beispielsweise gemäß Fig. 1, notwendig sind.

In Fig. 3 ist, insbesondere an einer zweiten Stirnseite 46, keine Leiter-Schnittstelle und keine Kühlkanal-Schnittstelle zu weiteren in positiver X-Richtung gegebenenfalls angeordneten Generatorleisten dargestellt. Zumindest solche Kühlkanal-Schnittstellen können jedoch ebenfalls deutlich einfacher ausgeführt werden als gemäß dem Stand der Technik; beispielsweise analog der in Fig. 3 dargestellten Kühlwasser-Schnittstelle 42.

## Patentansprüche

1. Wassergekühlte Generatorleiste (10) mit wenigstens zwei parallel angeordneten Leiterstapeln (12, 14), die jeweils einem Mehrzahl übereinander angeordneter, voneinander mittels einer Leiterisolation (16) elektrisch isolierter Leiter (8) aufweisen, wobei
die Leiter zueinander mittels eines ausgehärteten Harzes (22) geometrisch festgelegt sind, und wobei zwischen den Leiterstapeln ein Abstandsraum (24) vorgesehen ist, in dem wenigstens ein Kühlkanal (20) zur Leitung von Kühlwasser angeordnet ist, wobei der Kühlkanal eine hoch-wärmeleitfähige Außenhülle (21) aufweist, deren Außenseite wenigstens in Teilabschnitten in Berührung mit der Leiterisolation von Leitern der Leiterstapel steht und wobei die Außenhülle des Kühlkanals eine elektrische Isolierschicht aufweist,
**dadurch gekennzeichnet,**
**dass** die Außenhülle des Kühlkanals zumindest bereichsweise einen ferromagnetischen Werkstoff aufweist.

2. Generatorleiste gemäß Anspruch 1,
wobei das Material der Außenhülle des Kühlkanals einen, insbesondere faserverstärkten und/oder abriebfesten, Polymerwerkstoff und/oder einen nicht-magnetischen metallischen Werkstoff aufweist.

3. Generatorleiste gemäß einem der vorherigen Ansprüche, wobei sich der Kühlkanal im Wesentlichen entlang der gesamten Stapelhöhe (Z) der Leiterstapel erstreckt.

4. Generatorleiste gemäß einem der vorherigen Ansprüche, wobei im Kühlkanal wenigstens eine, insbesondere quer zur Stapelhochrichtung verlaufende, Trennbande (38) zur Lenkung eines Flusses von Kühlwasser im Kühlkanal vorgesehen ist.

5. Generatorleiste gemäß einem der Ansprüche 1 bis 2, aufweisend mehrere Kühlkanäle, die derart angeordnet sind, dass im Wesentlichen entlang der gesamten Stapelhöhe der Leiterstapel wenigstens einer der Kühlkanäle angeordnet ist.

6. Generatorleiste gemäß einem der vorherigen Ansprüche, wobei die Leiter der Leiterstapel einen abgerundeten oder abgefasten Rechtecks-Querschnitt mit einer kurzen Seite (30) und einer langen Seite (32) aufweisen und mit der Außenhülle eines Kühlkanals an ihrer kurzen Seite in Berührung stehen.

7. Generatorleiste gemäß einem der vorherigen Ansprüche, wobei zwischen der Außenseite des Kühlkanals und jeweils zwei benachbarten Leitern eines der Leiterstapel ein Zwischenraum (36) angeordnet ist, der wenigstens teilweise mit einem hoch-wärmeleitfähigen Füllstoff (28) gefüllt ist.

8. Generatorleiste gemäß Anspruch 7,
wobei der hoch-wärmeleitfähige Füllstoff ein wärmeaushärtendes Harz (22) aufweist, in welchem planare und/oder kugelige Partikel mit einem Aluminiumoxid-Werkstoff, einem Boron-Nitrid-Werkstoff und/oder einem anderen festen Werkstoff mit einer Wärmeleitfähigkeit von mehr als 30 W/mK, insbesondere im Wesentlichen gleichmäßig verteilt, angeordnet sind.

9. Generatorleiste gemäß einem der vorherigen Ansprüche, aufweisend zwei Stirnseiten (44, 46), an welchen der Kühlkanal jeweils mittels einer einzigen Kühlwasser-Schnittstelle (42) mit einem Kühlwasserkreislauf (40) und/oder mit einem anderen Kühlkanal dieser oder einer weiteren Generatorleiste verbindbar ist.

10. Elektrische Maschine (1) mit einer Rotoranordnung und einer Statoranordnung,
die eine Mehrzahl von Leitergruppen mit jeweils einer Mehrzahl in Reihe geschalteter Generatorleisten (10) gemäß einem der vorherigen Ansprüche aufweist.

11. Elektrische Maschine gemäß Anspruch 10,
aufweisend einen Kühlwasserkreislauf (40), der alle oder zumindest einige Generatorleisten (10) einer Leitergruppe mit Kühlwasser versorgt.

12. Verfahren zur Herstellung einer wassergekühlten Generatorleiste (10),
gemäß einem der vorherigen Ansprüche, mit den Schritten:
- einen Kühlkanal (20) auf einer Außenseite (21) mit einem hoch-wärmeleitfähigen Füllstoff (28) beschichten, wobei der Kühlkanal eine hoch-wärmeleitfähige Außenhülle (21) aufweist, die zumindest bereichsweise einen ferromagnetischen Werkstoff und eine elektrische Isolierschicht aufweist;
- zwei Leiterstapel (12, 14) bereitstellen;
- die Leiterstapel und den beschichteten Kühlkanal zueinander so positionieren, dass Kontakt zwischen den Leiterisolationen (16) der einzelnen Leiter der Leiterstapel und dem Füllstoff besteht;
- die derart positionierte Anordnung aus Leiterstapeln und Kühlkanal durch Erhitzen und/oder Druckbeaufschlagen aushärten.

## Claims

1. Water-cooled generator strip (10) having at least two conductor stacks (12, 14), which are arranged in parallel and which each have a plurality of conductors (8) which are arranged one above another and are electrically insulated from one another by means of a conductor insulation (16),
wherein
the conductors are fastened geometrically in relation to one another by means of a cured resin (22), and wherein
a clearance (24) is provided between the conductor stacks, in which clearance there is arranged at least one cooling channel (20) for conveying cooling water, wherein the cooling channel has an outer shell (21) of high thermal conductivity, the outer side of which is in contact at least in partial portions with the conductor insulation of conductors of the conductor stacks, and wherein the outer shell of the cooling channel comprises an electrical insulating layer,
**characterized**
**in that** the outer shell of the cooling channel at least in certain regions comprises a ferromagnetic material.

2. Generator strip according to Claim 1,
wherein the material of the outer shell of the cooling channel comprises an, in particular fiber-reinforced and/or abrasion-resistant, polymer material and/or a non-magnetic metallic material.

3. Generator strip according to either of the preceding claims, wherein the cooling channel extends substantially along the entire stacking height (Z) of the conductor stacks.

4. Generator strip according to one of the preceding claims, wherein at least one separating band (38), running in particular transversely to the vertical stacking direction, is provided in the cooling channel for directing a flow of cooling water in the cooling channel.

5. Generator strip according to either of Claims 1 and 2, having a plurality of cooling channels, which are arranged in such a manner that at least one of the cooling channels is arranged substantially along the entire stacking height of the conductor stacks.

6. Generator strip according to one of the preceding claims, wherein the conductors of the conductor stacks have a rounded or chamfered rectangular cross section with a short side (30) and a long side (32) and are in contact with the outer shell of a cooling channel on their short side.

7. Generator strip according to one of the preceding claims, wherein an intermediate space (36) which is filled at least partially with a filler (28) of high thermal conductivity is arranged between the outer side of the cooling channel and in each case two neighboring conductors of one of the conductor stacks.

8. Generator strip according to Claim 7,
wherein the filler of high thermal conductivity comprises a thermosetting resin (22), in which there are arranged, in particular distributed in a substantially uniform manner, planar and/or spherical particles comprising an aluminum oxide material, a boron nitride material and/or another solid material having a thermal conductivity of more than 30 W/mK.

9. Generator strip according to one of the preceding claims, having two end sides (44, 46), at which the cooling channel can be connected in each case by means of a single cooling water interface (42) to a cooling water circuit (40) and/or to another cooling channel of this or of a further generator strip.

10. Electric machine (1) having a rotor assembly and a stator assembly,
said electric machine having a plurality of conductor groups each having a plurality of series-connected generator strips (10) according to one of the preceding claims.

11. Electric machine according to Claim 10,
having a cooling water circuit (40), which supplies all or at least some generator strips (10) of a conductor group with cooling water.

12. Method for producing a water-cooled generator strip (10), according to one of the preceding claims, said method comprising the following steps:
- coating a cooling channel (20) on an outer side (21) with a filler (28) of high thermal conductivity, wherein the cooling channel has an outer shell (21) of high thermal conductivity which at least in certain regions comprises a ferromagnetic material and an electrical insulating layer;
- providing two conductor stacks (12, 14);
- positioning the conductor stacks and the coated cooling channel in relation to one another in such a way that there is contact between the conductor insulations (16) of the individual conductors of the conductor stacks and the filler;
- curing the assembly of conductor stacks and cooling channel which is positioned in such a manner by heating and/or applying pressure.

## Revendications

1. Barre omnibus (10) de générateur refroidie à l'eau comprenant au moins deux piles (12, 14) de conducteurs disposées en parallèle qui présentent chacune une pluralité de conducteurs (8) disposés l'un sur l'autre, isolés électriquement l'une de l'autre au moyen d'une isolation de conducteur (16), dans laquelle
les conducteurs sont fixés entre eux géométriquement au moyen d'une résine (22) durcie, et dans laquelle
un espace de séparation (24) est prévu entre les piles de conducteurs dans lequel au moins un canal de refroidissement (20) est disposé pour transporter de l'eau de refroidissement, dans laquelle le canal de refroidissement présente une enveloppe extérieure (21) à haute conductivité thermique, dont le côté extérieur est, au moins par tronçons, en contact avec l'isolation de conducteur des conducteurs de la pile de conducteurs et dans laquelle l'enveloppe extérieure du canal de refroidissement présente une couche isolante électrique,
**caractérisée en ce que** l'enveloppe extérieure du canal de refroidissement présente un matériau ferromagnétique au moins par endroits.

2. Barre omnibus de générateur selon la revendication 1, dans laquelle le matériau de l'enveloppe extérieure du canal de refroidissement présente un matériau polymère en particulier renforcé par fibres et/ou résistant à l'usure et/ou un matériau métallique non-magnétique.

3. Barre omnibus de générateur selon l'une des revendications précédentes, dans laquelle le canal de refroidissement s'étend essentiellement le long de toute la hauteur d'empilement (Z) de la pile de conducteurs.

4. Barre omnibus de générateur selon l'une des revendications précédentes, dans laquelle au moins une bande de séparation (38), en particulier transversale au sens vertical de la pile, est prévue dans le canal de refroidissement pour diriger un flux d'eau de refroidissement dans le canal de refroidissement.

5. Barre omnibus de générateur selon l'une des revendications 1 à 2, présentant plusieurs canaux de refroidissement qui sont disposés de telle sorte qu'au moins un des canaux de refroidissement est disposé essentiellement le long de toute la hauteur d'empilement de la pile de conducteurs.

6. Barre omnibus de générateur selon l'une des revendications précédentes, dans laquelle les conducteurs de la pile de conducteurs présentent une section carrée arrondie ou chanfreinée avec une face courte (30) et une face longue (32) et sont en contact avec l'enveloppe extérieure d'un canal de refroidissement sur leur face courte.

7. Barre omnibus de générateur selon l'une des revendications précédentes, dans laquelle entre la face extérieure du canal de refroidissement et respectivement deux conducteurs voisins d'une des piles de conducteurs est disposé un espace intermédiaire (36) qui est au moins partiellement rempli d'une charge (28) à haute conductivité thermique.

8. Barre omnibus de générateur selon la revendication 7, dans laquelle la charge à haute conductivité thermique présente une résine (22) thermodurcissable dans laquelle des particules planaires et/ou sphériques avec un matériau d'oxyde d'aluminium, un matériau de nitrure de bore et/ou un autre matériau solide avec une conductivité thermique supérieure à 30 W/mK sont disposées, en particulier réparties essentiellement régulièrement.

9. Barre omnibus de générateur selon l'une des revendications précédentes, présentant deux faces avant (44, 46) sur lesquelles le canal de refroidissement peut être relié respectivement au moyen d'une seule interface (42) d'eau de refroidissement, à un circuit d'eau de refroidissement (40) et/ou à un autre canal de refroidissement de cette barre omnibus de générateur ou d'une autre.

10. Machine électrique (1) comprenant un agencement de rotor et un agencement de stator, qui présente une pluralité de groupes de conducteurs avec respectivement une pluralité de barres omnibus (10) de générateur selon l'une des revendications précédentes montées en série.

11. Machine électrique selon la revendication 10, présentant un circuit d'eau de refroidissement (40) qui alimente en eau de refroidissement toutes ou au moins quelques barres omnibus (10) de générateur d'un groupe de conducteurs.

12. Procédé de fabrication d'une barre omnibus (10) de générateur refroidie à l'eau, selon l'une des revendications précédentes, comprenant les étapes :
- de revêtir un canal de refroidissement (20) sur un côté extérieur (21) avec une charge (28) à haute conductivité thermique, dans lequel le canal de refroidissement présente une enveloppe extérieure (21) à haute conductivité thermique qui présente au moins par endroits un matériau ferromagnétique et une couche isolante électrique ;
- de fournir deux piles (12, 14) de conducteurs ;
- de positionner les piles de conducteurs et le canal de refroidissement revêtu entre eux de façon à ce qu'il y ait contact entre les isolations de conducteur (16) des différents conducteurs de la pile de conducteurs et la charge ;
- de durcir l'agencement ainsi positionné de piles de conducteurs et de canal de refroidissement par échauffement et/ou application de pression.
